# EUROPEAN PATENT APPLICATION

(11) **EP 4 806 868 A1**
(43) Date of publication of application: **16.09.2026**
(21) Application number: 26163309.3
(22) Date of filing: 09.03.2026
(51) Int. Cl.: C04B 41/00, C04B 41/50, C04B 41/53, C04B 41/91

(54) **METHODS FOR COATING REMOVAL**

(30) Priority: 11.03.2025 US 202519076486
(71) Applicant: General Electric Company, Cincinnati, Ohio 45215 (US)
(72) Inventor: PROCHASKA, Stephanie Orfali, Niskayuna, 12309 (US); VOZAR, Andrea Lena, Niskayuna, 12309 (US); MAZURKIEWICZ-MONTGOMERY, Bernadetta, Niskayuna, 12309 (US)
(74) Representative: Openshaw & Co.

(57) **Abstract**

Methods are provided herein for coating removal. In some embodiments, the methods can be used to remove an environmental barrier coating (EBC) (104). The methods of coating removal described herein can be used to remove a coating from a component using chemical digestion of the coating by a liquid reagent (122) in a closed vessel (124, 150). The chemical digestion is performed in the closed vessel (124, 150) at elevated temperatures and/or elevated pressures. Heat is applied to the closed vessel (124, 150) to achieve elevated temperatures to accelerate the digestion reaction. In some embodiments, heating is accomplished by applying microwave energy to the closed vessel (124, 150).

## Description

### TECHNICAL FIELD

These teachings relate generally to methods for removing a coating from a substrate.

### BACKGROUND

Gas turbine engines may be subjected to high operating temperatures. Components that are exposed to these high operating temperatures often include protective coatings. For example, turbine blades and turbine vanes, may include one or more coating layers that protect the component and thereby enhance durability of the component under harsh operating conditions. Environmental barrier coatings (EBCs) are one type of protective coating that can be applied to components subjected to high temperatures. EBCs protect components from attack by reactive species, such as high temperature water vapor.

With the use of EBCs, as part of component maintenance, the EBCs may need to be removed from a component and replaced. For example, when a layer of an EBC is damaged during engine operation, the EBC may be removed and replaced to produce a refreshed coating. In addition, an EBC may need to be removed from a component during component manufacturing, for example, to address coating defects or damage. Thus, methods for removing environmental barrier coatings may be desirable.

### BRIEF DESCRIPTION OF DRAWINGS

Various needs are at least partially met through provision of the methods for coating removal described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a schematic diagram of an exemplary component with a coating thereon that may be removed, in accordance with some embodiments;
FIG. 2 comprises a flow diagram of a method for removing a coating from a substrate, in accordance with some embodiments;
FIG. 3 comprises a flow diagram of a method for removing a coating from a substrate. in accordance with some embodiments;
FIG. 4 comprises a schematic diagram of a coating removal process, in accordance with some embodiments; and
FIG. 5 comprises a schematic diagram of a coating removal process, in accordance with some embodiments.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

Methods are generally provided herein for coating removal. The methods of coating removal described herein can be used to remove a coating from a component using chemical digestion of the coating by a liquid reagent in a closed vessel. The chemical digestion is performed in the closed vessel at elevated temperatures and/or elevated pressures. Heat is applied to the closed vessel to achieve elevated temperatures to accelerate the digestion reaction. In some embodiments, heating is accomplished by applying microwave energy to the closed vessel. When heat is applied to the closed vessel, temperatures in the vessel may become higher than a boiling point of the reagent that is being used to digest the coating. Applying heat to the closed vessel also builds pressure within the closed vessel. Elevated temperatures and elevated pressures speed up the rate of the digestion reaction. Elevated pressure may increase concentration of reactants which leads to a higher probability of collision between reactant molecules, which in turn increases reaction rate. Elevated temperatures may provide reactant molecules with more kinetic energy, leading to more forceful collisions, which also in turn increases reaction rate. The combination of elevated temperatures and/or pressures that can be accomplished in the closed vessel digestion reduces the amount of time needed to chemically digest the coating.

The methods for coating removal described herein may be used to remove coatings from a variety of substrates. In some embodiments, the methods of coating removal described herein can be used to remove an environmental barrier coating (EBC) from a substrate such as a CMC. Traditional approaches for removing EBC coatings from a substrate typically involve mechanical approaches such as grit blasting. Such mechanical approaches can mechanically damage the underlying substrate. When the underlying substrate (e.g., a component) is damaged with coating removal, the substrate may have to be subsequently repaired and/or replaced, increasing the cost of coating repair. Further, mechanical approaches such as grit blasting are often labor-intensive and are performed by a skilled operator, which further increases time and costs associated with coating repair.

Advantageously, the methods for coating removal described herein may be used to chemically remove a coating, such as an EBC, from a component. Thus, it may be possible to avoid exposing the component to aggressive mechanical media for coating removal to help prevent or reduce damage to the substrate underlying the coating. The chemical approaches generally involve digestions of the coating. The digestion process is more hands-off, involving contacting the component with a reagent.

Further, the methods for coating removal described herein may be used in conjunction with mechanical abrasion. Using the approaches described herein, it may be possible to weaken a coating prior to mechanical abrasion, thereby allowing for the use of less aggressive media for mechanical removal. The use of less aggressive media for mechanical removal may reduce the damage to the underlying substrate during the coating removal process.

The methods for coating removal described herein can be used on a variety of coatings, with one exemplary group of coatings being EBCs. The methods for coating removal described herein can also be used to remove bond coats, such as silicon (Si) bond coats that underly a coating such as an EBC. In addition, the methods may be used to remove thermally grown oxides (TGOs), which are layers of silicon oxides that can form at the interface of an EBC.

The methods for coating removal described herein can be used to remove coatings from a variety of substrates. In some examples, the substrate is a ceramic matrix composite (CMC). In addition, the substate on which the coating is applied may be in many forms. In some approaches, the substrate is a component or a portion thereof. In some embodiments, the component is a component that is subjected to harsh operating conditions such as high temperatures, supersonic speeds, intense stress, or severe oxidation. In some embodiments, the component is a component that is incorporated in at least one of a turbine, an aeroengine, an aerospace application, a hypersonic application, or a space application. For example, the component may be a component of a turbine (e.g., a blade, a vane, a shroud) or an aeroengine (e.g., a stator vane, a rotor blade, a liner, a combustor, a nozzle, etc.). Aerospace applications include but are not limited to applications relating to aircrafts, spacecraft, propulsion systems, satellites, etc. Hypersonic applications include but are not limited to applications related to hypersonic vehicles, propulsion systems, etc. Space applications include but are not limited to applications relating to vehicles and propulsion systems that can be launched into space. It is contemplated that the component can be any engine part or structural component in an aerospace, hypersonic, or space application.

As used herein, a closed vessel may refer to a vessel that is sealed such that internal contents of the vessel are isolated from an external environment (e.g., an environment that is external to the vessel).

As used herein, a stripped substrate may refer to a substrate where at least a portion of a coating has been removed from the substrate.

As used herein, environmental-barrier-coating or "EBCs" may refer to a coating system comprising one or more layers of ceramic materials, each of which provides specific or multifunctional protections to the underlying substrate. EBCs can be comprised of single or multiple layers of materials. Each layer may be composed of single or multiple chemical compositions and may be doped as desired. EBCs generally include a plurality of layers, such as silicon-based coatings (e.g., elemental silicon bondcoat), rare earth silicate coatings (e.g., rare earth disilicates such as slurry or APS-deposited yttrium ytterbium disilicate (YbYDS)), alkaline earth aluminosilicates (e.g., comprising barium-strontium-aluminum silicate (BSAS), such as having a range of compositions of BaO, SrO, Al₂O₃, SiO₂, or combinations thereof), or combinations thereof.

EBC materials include, but are not limited to, rare earth (RE)-disilicates; rare earth (RE)-monosilicates; alkaline earth (AE) aluminosilicates (AEAl₂Si₂O₃); aluminum silicate or mullite (Al₆Si₂O₁₃); zirconium silicate (ZrSiO₄), hafnium silicate (HfSiO₄); compounds having the formula MxHfyOz; compounds having the formula (MxSiy); silicon nitride (Si₃N₄); silicon carbide (SiC); ceramics based on the elements silicon, aluminum, oxygen, and nitrogen (SiAlON); compounds having the formula (SiₓC_{y}N_{z}O); oxide composites; and non-oxide composites. Rare earth elements include cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb), and yttrium (Y). Alkaline earth elements include strontium (Sr), barium (Ba), and radium (Ra). An example of an alkaline earth aluminosilicate is Ba_{0.75}Sr_{0.25}Al₂Si₂O₈ (BSAS). In the above formulas M is a rare earth element, hafnium (Hf), titanium (Ti), or tantalum (Ta).

The EBC can be fabricated in any suitable manner. In some embodiments, the EBC is fabricated using a thermal spray method. In other embodiments, the EBC is fabricated using a slurry-based process. In other embodiments, the EBC is fabricated using a physical vapor deposition process, including but not limited to electron beam physical vapor (EBPVD) and plasma spray physical vapor deposition (PSPVD). In yet other embodiments, the EBC is fabricated using sputtering techniques, including but not limited to magnetron sputtering, RF sputtering, diode sputtering, or reactive sputtering. Thermal spray methods that can be used to fabricate the EBC include but are not limited to air plasma spraying (APS), very low-pressure plasma spraying (VLPPS), suspension plasma spraying (SPS), high velocity oxygen fuel (HVOF) spraying, solution precursor plasma spray (SPPS), and high velocity air fuel (HVAF) spraying.

The EBC can also be fabricated using one or more sintering aids. For example, one or more sintering aids may be involved in any of the aforementioned fabrication techniques (e.g., thermal spray process, slurry-based process, physical vapor deposition processes, or sputtering processes).

As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may include a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃·2SiO₂), as well as glassy aluminosilicates.

CMC material as used herein may be formed using any known or hereinafter developed methods including but not limited to melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

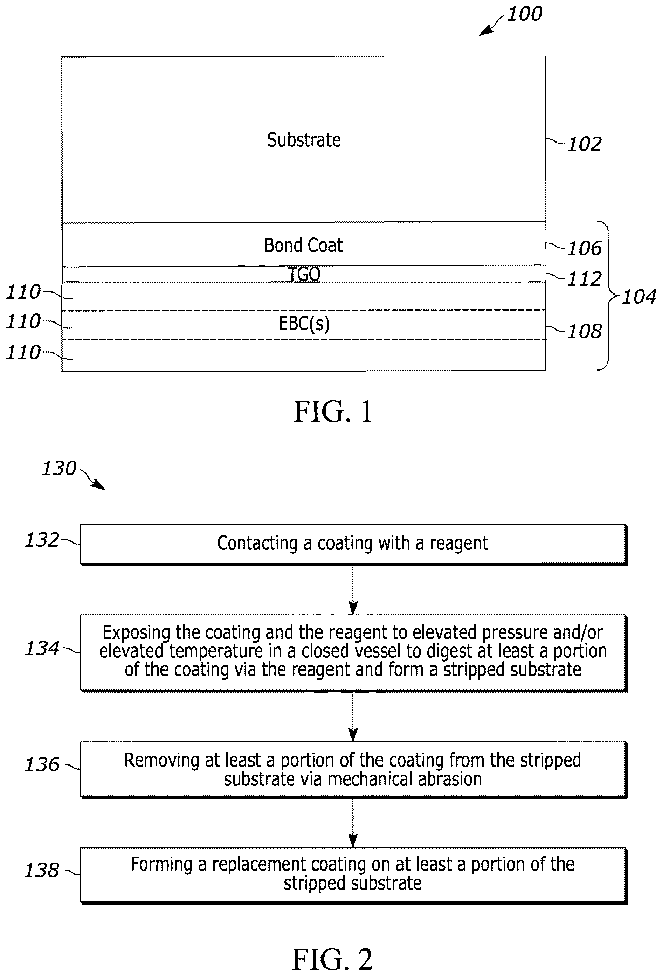

Referring now to FIG. 1, an exemplary component 100 that can be subjected to the coating removal approaches described herein is shown. The component 100 includes a substrate 102 and an EBC 104 disposed on the surface of the substrate 102. In some embodiments, the substrate is a material suitable for an aerospace application. In some embodiments, the substrate 102 is formed from a CMC material. In other embodiments, the substrate is formed from one or more of a superalloy, a steel alloy, a stainless steel alloy, an aluminum alloy, etc. In some embodiments, the substrate 102 is formed from a monolithic silicon carbide (SiC).

In the example of FIG. 1, the EBC 104 comprises a bond coat 106 that is disposed in direct contact with the substrate 102. Though, in some embodiments, a bond coat 106 may not be present in the EBC 104. An EBC topcoat 108 is disposed over the bond coat 106. In one embodiment, the bond coat 106 comprises silicon (e.g., elemental silicon), a silicon-based material (e.g., a silicide), mullite, or a combination thereof.

When the bond coat 106 comprises a silicon-containing material, a thermally grown oxide ("TGO") layer 112 may be present on the surface of the bond coat 106 as shown in FIG. 1. Thus, the bond coat 106 and the TGO layer 112 are between the silicon-containing substrate 102 and the EBC topcoat 108. The TGO layer 112 may form on the surface of the bond coat 106 when silicon in the bond coat 106 oxidizes upon exposure to air. For example, the TGO layer 112 may be a layer of silicon oxide (sometimes referred to as "silicon oxide scale" or "silica scale"), formed during exposure to oxygen (e.g., during manufacturing and/or use) of the component 100.

The EBC topcoat 108 comprises a plurality of EBC layers 110. It is also contemplated that, in some embodiments, the EBC topcoat 108 may comprise a single EBC layer. Each of the individual EBC layers 110 can be formed of materials selected from typical EBC layer chemistries.

The methods for coating removal described herein may be adjusted or tailored based on the composition of the coating, for example, the methods may be tailored to digest one or more coating layers. The reagent composition and/or digestion conditions (e.g., temperature, pressure) can be tailored to accelerate the digestion of a particular coating or coating layer.

FIG. 2 illustrates an exemplary method 130 for removing a coating from a coated component using digestion in a closed vessel. In some embodiments, the method 130 can be used to remove at least a portion of the EBC 104 from the component 100.

The method 130 generally includes contacting, at 132, the coating with a reagent in a closed vessel. Any suitable reagent can be used for the digestion. The reagent may be a liquid reagent, for example, such that the component or a portion thereof (e.g., a coated portion) can be submerged in the reagent. In some aspects, the reagent is selected to selectively dissolve or digest the coating while leaving the substrate in-tact.

In some embodiments, the reagent is selected to dissolve one or more layers of the EBC 104 on the component 100 of FIG. 1. In some embodiments, the reagent is selected to dissolve one or more of the bond coat 106 or the TGO layer 112 on the surface of the bond coat 106. In other embodiments, one or more of the bond coat 106 or the TGO layer 112 are left intact in the method 130, for example, for subsequent re-coating or removal through a different process such as grit-blasting or vacuum based annealing. The amount of reagent relative to the amount of coating may be present at a ratio in the range of about 0.01:1 to about 4:1, about 0.5:1 to about 2:1, about 5:1 to about 10:1, or, in some aspects, about 1:1 by volume.

In some embodiments, when the coating to be removed is an EBC, the reagent is a base or a mineral acid. In some examples, the mineral acid for removing the coating comprises at least one of nitric acid (HNO₃), hydrochloric acid (HCl), hydrofluoric acid (HF), sulfuric acid (H₂SO₄), phosphoric acid (H₃PO₄), hydrogen peroxide (H₂O₂), aqua regia, reverse aqua regia, or boric acid (H₃BO₃). In another example, the mineral acid is selected from the group consisting of nitric acid (HNO₃), hydrochloric acid (HCl), hydrofluoric acid (HF), sulfuric acid (H₂SO₄), phosphoric acid (H₃PO₄), hydrogen peroxide (H₂O₂), aqua regia, reverse aqua regia, boric acid (H₃BO₃), and combinations thereof.

In some embodiments, when the coating includes a bond coat to be removed, the reagent is a mineral acid. In some examples, when the bond coat is a silicon bond coat, the mineral acid for removing the bond coat comprises at least one of hydrofluoric acid (HF) or nitric acid (HNO₃). In other embodiments, when the coating includes a bond coat to be removed, the reagent is a base. In some examples the base for removing the bond coat comprises at least one of sodium hydroxide (NaOH) or potassium hydroxide (KOH).

In some embodiments, the reagent is a salt. The salt may be a solid and, in some approaches, the salt is a particulate solid. Using a particulate solid may increase the surface area of the salt so that more of the salt is exposed to the coating, increasing the rate of reaction. A ratio of the salt to the coating may be in the range of about 6:1 to about 20:1, about 6:1 to about 12:1, about 8:1 to about 12:1, or, in some aspects, about 10:1 by weight. In some embodiments, when a salt is used as the reagent the temperature inside the vessel is greater than the melting temperature of the salt.

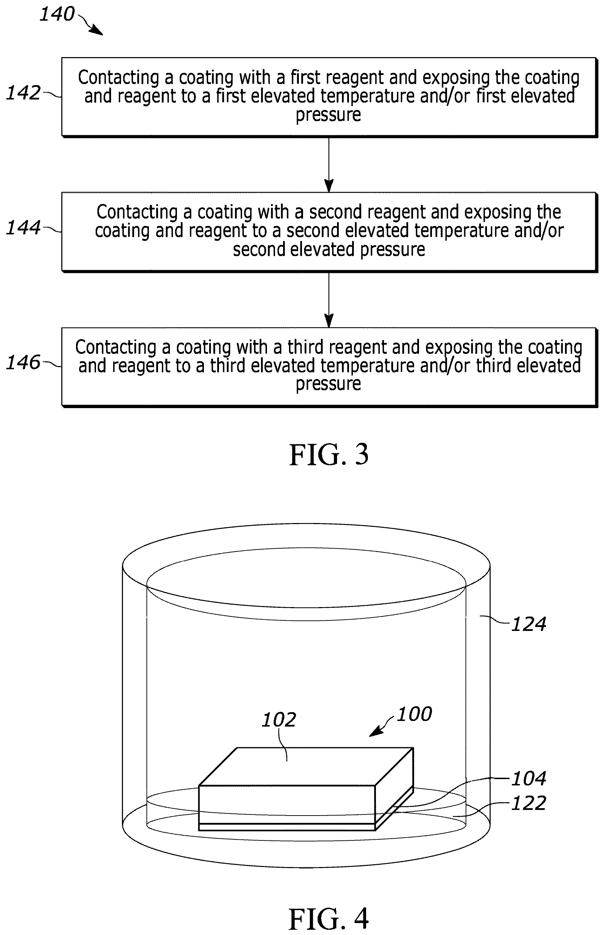

The coating may be contacted with the reagent in a closed vessel by completely or partially submerging the component in the reagent in a vessel and sealing or isolating the component and reagent within the vessel. FIG. 4 illustrates one exemplary approach for contacting the coating with the reagent. FIG. 4 is a schematic diagram of how the EBC 104 can be contacted with a reagent 122, is illustrated according to one non-limiting example. In FIG. 4, the component 100 is partially submerged in the reagent 122 in a closed vessel 124. As shown, the component 100 is partially submerged in the reagent 122 such that the portion of the component 100 with the EBC 104 is fully submerged in or otherwise in contact with the reagent 122. In other embodiments, the component 100 can be fully submerged in the reagent 122. In yet other embodiments, a portion of the EBC 104 is submerged in the reagent 122 to target one or more layers of the coating. For example, with reference to FIG. 1, one or more of the outermost individual EBC layers 110 can be submerged in the reagent 122.

In some approaches, the reagent is placed on top of the coating to contact the coating with the reagent. For example, the reagent may be in particulate form, such as in a salt form. In such an approach, the reagent may be sprinkled on top of the coating or portion thereof.

In yet other approaches, the component bearing the coating may be suspended over the reagent, which vaporizes upon heating, coming in contact with the coating and reacting with the coating.

In some embodiments, before the coating is contacted with the reagent, the method 130 further includes forming one or more recesses or slots in the coating. The recesses can be in the form of lines, notches, or rounded recesses. Further, in some aspects, the recesses can be formed in a pattern on a surface of the coating, for example, in a grid or a grouping. The recesses can extend through one or more layers of the coating and, in some approaches, through the bond coat. In some approaches, the recesses extend to a target layer of the coating to aid in selective removal of one or more coating layers. In some examples, one or more recesses have a width in the range of about 0.01 millimeters to 5 millimeters and/or a depth in the range of about 7 mils to 25 mils. Any suitable technique can be used to form the recesses that can be formed in the coating. In some examples, the recesses are formed via at least one of a laser, a saw, ultrasonic machining, electrical discharge machining (EDM), carving with a sharp implement, abrasive water jetting, chemical etching, or engraving.

Forming recesses or slots in the coating before contacting the coating with the reagent may increase the effectiveness of digestion of the coating. While not wishing to be bound by theory, forming recesses in the coating segments the coating, providing enhanced access to the coating and/or to the bond coat. Additionally, forming recesses may compromise the hermeticity of the certain coatings, making the coating more susceptible to digestion.

The method 130 further includes, at 134, exposing the coating and the reagent to at least one of an elevated pressure or an elevated temperature in the closed vessel to digest at least a portion of the coating via the reagent and form a stripped substrate. Sealing the coated component and reagent in a closed vessel and heating the closed vessel increases both temperature and pressure, accelerating the coating digestion reaction.

The elevated temperature can be any temperature above room temperature (e.g., above about 72 degrees Fahrenheit). Suitable elevated temperatures for the digestion include temperatures in the range of about 100 degrees Celsius to about 500 degrees Celsius, or in the range of about 100 degrees Celsius to about 300 degrees Celsius. In some embodiments the elevated temperature is below the boiling point of the reagent.

The elevated pressure can be any suitable pressure above atmospheric pressure. In some examples, the elevated pressure is any pressure above atmospheric pressure and less than about 2800 psi. Suitable elevated pressures for the digestion include pressures in the range of about 100 pounds per square inch (psi) to about 2800 psi, about 100 psi to about 1500 psi, about 100 psi to about 1000 psi, about 100 psi to about 500 psi, about 100 psi to about 400 psi, about 100 psi to about 300 psi, about 500 psi to about 1500 psi, about 500 psi to about 1000 psi, about 200 psi to about 800 psi, about 200 psi to about 600 psi, about 300 psi to about 800 psi, about 300 psi to about 600 psi, or about 200 psi to about 500 psi. The elevated pressure may change the properties of the reagent to increase the efficiency of the reaction with the coating. A target pressure may depend on reagent type, vessel operating limits, and/or a target reaction rate.

It is contemplated that, in some embodiments, the pressure may be lower than (e.g., not elevated above) atmospheric pressure. In some examples, the pressure for the digestion may include pressures in the range of about 0 psi to about 15 psi, about 0 psi to about 50 psi, or about 0 psi to about 100 psi.

In some approaches, the closed vessel may be subjected to vacuum conditions. Vacuum conditions may facilitate the use of temperatures below room temperature.

Elevating the temperature of the closed vessel may also result in an elevated pressure. In this manner, the temperature of the closed vessel can be controlled to elevate the pressure in the closed vessel as well and, in some aspects, can be controlled to achieve a target pressure within the closed vessel. The target pressure may be selected based on the pressures that can be withstood by the vessel. In other approaches, the vessel is equipped with a pressure control system. This pressure control system may adjust the pressure within the closed vessel to achieve a target pressure suitable for the digestion reaction. Furthermore, the pressure control system can regulate the pressure to prevent over-pressurization of the vessel.

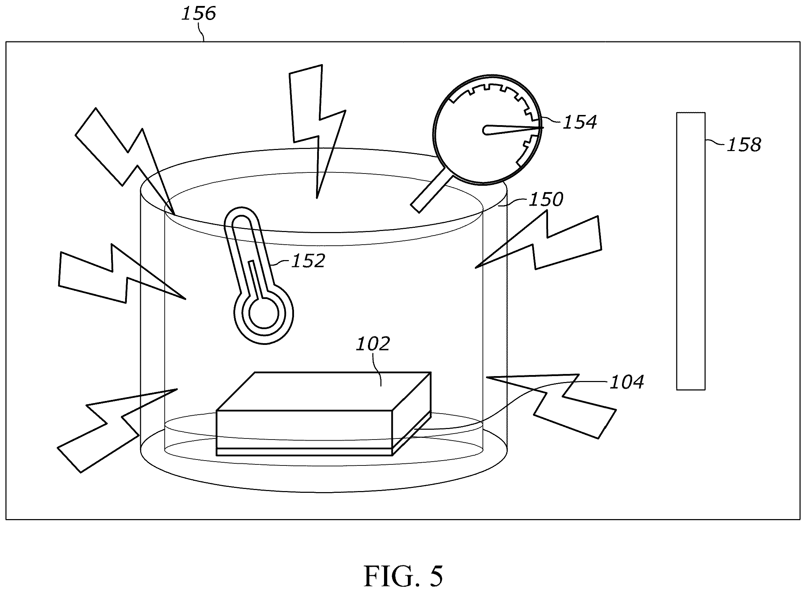

Any suitable technique can be used to subject the coating and reagent to the elevated temperature and pressure. Suitable techniques include but are not limited to microwave, furnace, conduction, or radio frequency (RF) heating. In one example, depicted in FIG. 5, the closed vessel undergoes microwave heating to expose the coating and reagent to an elevated temperature. When using microwave radiation for heating, the power level of the microwaves can be adjusted to regulate the pressure within the closed vessel. In another example, the closed vessel is placed in a furnace at elevated temperature to heat its contents. In another example, a closed vessel is exposed to RF as a heat source. In another example, a closed vessel is placed on a hot plate or other "open" heat source such as a heat pad, exposed flame, etc.

In some embodiments, a component having the coating disposed thereon is separated or disassembled into smaller constituent parts before performing the method 130 or portions thereof. For example, a component may be disassembled to isolate a coated constituent component and/or to reduce the size of the component for ease of carrying out the method. In some aspects, a size of the closed vessel may dictate a size of component or constituent part that can be subjected to the method 130. Once the method 130 is complete and the coating or portions thereof have been removed and/or a replacement coating reapplied, the component may be re-assembled.

In some embodiments, further coating removal methods are used in conjunction with the digestion approaches described herein. At 136, the method 130 includes removing at least a portion of the coating from the stripped substrate via mechanical abrasion or dissolution.

After coating digestion, the component can be cleaned using mechanical abrasion to remove any remaining coating. For example, coating digestion may partially remove or weaken the coating. Any remaining coating can then be removed through a mechanical process. Due to weakening of the coating via digestion, it may be possible to use less aggressive mechanical processes, for example less aggressive media in grit blasting. Use of less aggressive mechanical processes in coating removal can help to reduce damage to the underlying substrate during the coating removal process.

Any suitable method of mechanical abrasion can be used in conjunction with coating digestion. Suitable methods of mechanical abrasion include but are not limited to grit blasting, ice blasting, or water jets. Contacting the coating with the reagent for a shorter exposure time and following the digestion by mechanical abrasion can shorten the overall coating removal time. If submersion in the reagent is shown to damage the underlying substrate at an extended exposure time, the exposure time may be shortened, and digestion can be used in combination with another removal method such as mechanical abrasion.

Further, when the reagent is a salt, exposure to elevated temperatures and elevated pressures, at 134, may form a dissolvable reaction product via fusion of the coating with the salt. At elevated temperatures, for example, temperatures at or above the melting point of the salt, the salt becomes molten, and the coating reacts with the molten salt in a fusion reaction to form the dissolvable reaction product. Thus, in such an embodiment, the component may be exposed to a solvent in a dissolution step. The dissolvable reaction product may be dissolved using an acid. To dissolve the dissolvable reaction product, the dissolvable reaction product is contacted with the acid. The dissolution process may be performed in the closed vessel or, alternatively in a separate vessel, such as an open vessel.

In some embodiments, a replacement coating is applied to the stripped substrate following digestion and any subsequent coating removal processes. At 138, the method 130 includes forming a replacement coating on at least a portion of the stripped substrate. The replacement coating may be formed using any suitable approach.

In some embodiments, the replacement coating is formed using a thermal spray method. In other embodiments, the replacement coating is formed using a slurry-based process. In other embodiments, the replacement coating is formed using a physical vapor deposition process, including but not limited to electron beam physical vapor (EBPVD) and plasma spray physical vapor deposition (PSPVD). In yet other embodiments, the replacement coating is formed using sputtering techniques, including but not limited to magnetron sputtering, RF sputtering, diode sputtering, or reactive sputtering. Thermal spray methods that can be used include but are not limited to air plasma spraying (APS), very low-pressure plasma spraying (VLPPS), suspension plasma spraying (SPS), high velocity oxygen fuel (HVOF) spraying, solution precursor plasma spray (SPPS), and high velocity air fuel (HVAF) spraying.

FIG. 3 illustrates an exemplary method 140 for removing a coating from a coated component using digestion in a closed vessel. In some embodiments, the method 140 can be used to remove various layers of the EBC 104 from the component 100. The method 140 can be used to dissolve multiple layers of a coating in a staged digestion process.

The method 140 generally includes contacting, at 142, the coating with a first reagent in a closed vessel at least one of a first elevated temperature or a first elevated pressure in a first digestion reaction. Any suitable first reagent can be used for the digestion. In some aspects, the first reagent, the first temperature, and/or the first pressure are selected to dissolve a layer of the coating (e.g., one or more EBC layers 110 of an EBC topcoat 108). The first reagent may be a liquid reagent, for example, such that the component or a portion thereof (e.g., a coated portion) can be submerged in the first reagent. Referring to FIG.1, the first reagent may target an EBC layer 110 of the EBC 104.

The method 140 also includes contacting, at 144, the coating with a second reagent in a closed vessel at least one of a second elevated temperature or a second elevated pressure in a second digestion reaction. Any suitable second reagent can be used for the digestion. In some aspects, the second reagent, the second temperature, and/or the second pressure are selected to dissolve a bond coat of the coating (e.g., bond coat 106). The second reagent may be a liquid reagent, for example, such that the component or a portion thereof (e.g., a coated portion) can be submerged in the second reagent. Referring to FIG.1, the first reagent may target a bond coat 106 of the EBC 104.

In some approaches, the method 140 also includes contacting, at 146, the coating with a third reagent in a closed vessel at least one of a third elevated temperature or a third elevated pressure in a third digestion reaction. Any suitable third reagent can be used for the digestion. In some aspects, the third reagent, the third temperature, and/or the third pressure are selected to dissolve a bond coat of the coating (e.g., bond coat 106). The third reagent may be a liquid reagent, for example, such that the component or a portion thereof (e.g., a coated portion) can be submerged in the third reagent. Referring to FIG.1, the third reagent may target a TGO layer 112 of the EBC 104.

In some approaches, the first, second, and third reagent are the same. In other approaches, one or more of the first, second, and third reagent are different.

Any suitable vessel can be employed in the method 130 and the method 140. In some embodiments, the vessel is made from a non-conductive material, such as polytetrafluoroethylene (PTFE). The vessel may be any type of vessel that is able to be sealed tightly from the surrounding environment, for example, such that the vessel can be "closed" to prevent matter from entering or leaving the vessel. Any type of vessel that can hold temperature and pressure can be used. Further, the vessel can be made of any material capable of holding temperatures and/or that is strong enough to endure elevated pressures while also being relatively chemical resistant. In some embodiments, the closed vessel is a vessel that acts as both a heating device (e.g., a furnace) and a pressure chamber. In some embodiments, the closed vessel is a microwave digester. The type and material composition of the closed vessel may depend on the heating process used to expose the coating and reagent to elevated temperatures.

As discussed above, in some embodiments, the vessel is equipped with a pressure control system that is operable to monitor and/or adjust a pressure inside the vessel, for example, to maintain a set pressure point. The vessel may be equipped with a temperature sensor and/or a pressure sensor for monitoring the contents of the vessel. In some embodiments, the vessel may include one or more external dials and/or controllers for adjusting a temperature and/or pressure of the vessel. In some aspects, the vessel is the vessel 124 that is shown and described with reference to FIG. 4.

FIG. 5 illustrates a vessel 150 that can be employed in the coating removal methods described herein. The vessel 150 can be used to carry out one or more steps in the method 130 or the method 140 described above. In some approaches, the vessel 150 is used to remove one or more layers of the EBC 104 from the substrate 102. The vessel 150 is equipped with a temperature sensor 152 for monitoring an internal temperature of the vessel 150. The vessel 150 is also equipped with a pressure sensor 154 for monitoring an internal pressure of the vessel 150.

According to some embodiments, the vessel 150 is placed in a microwave chamber 156 to carry out various steps of the methods described herein. The microwave chamber 156 includes one or more microwave energy sources 158 to generate microwave energy to heat the vessel 150 to a target temperature.

The digestion processes described herein may be carried out using standard procedures, for example with set times, temperatures, and/or pressures for a particular coating and/or substrate combination. Such procedures may also be dictated or specified based on a thickness of the coating. Alternatively, the digestion process may be performed by checking the component for dissolution (e.g., coating removal) progress at prescribed time periods. Further, the vessel used to carry out the digestion may include a viewing window to visually observe the progress.

To further illustrate the present disclosure, examples are given herein. It is to be understood that these examples are provided for illustrative purposes and are not to be construed as limiting the scope of the present disclosure.

### Example 1

A coupon comprising a CMC substrate coated with an EBC is placed in a closed vessel with the mineral acid hydrochloric acid (HCl). The coupon is heated via microwave energy in the reaction vessel for an exposure time in the range of 45 minutes to 90 minutes to digest the EBC.

### Example 2

A coupon comprising a CMC substrate coated with an EBC is placed in a closed vessel with aqua regia. Heat is applied to the vessel to bring the vessel to a temperature of 280 ºC. The coupon is exposed to an elevated pressure of 100 psi for an exposure time of 2 hours to digest the EBC.

### Example 3

A coupon comprising silicon carbide (SiC), an EBC material, disposed on a CMC substrate is placed in a closed vessel. The coupon is exposed to nitric acid at an elevated pressure of 350 psi and an elevated temperature of 200 ºC in the vessel for an exposure time of between 45 and 60 minutes.

### Example 4

An EBC coated CMC coupon is heated to 260 ºC in a closed PTFE vessel containing boric acid. The vessel containing the EBC exposed to the acid is pressurized to 1500 psi for 10 to 20 minutes.

### Example 5

A large, EBC-coated CMC component is disassembled into smaller components such that each smaller part is able to fit inside of a closed digestion vessel. The vessel, also containing HF, is heated to 150 ºC and subjected to an elevated pressure of 875 psi for 15 minutes. Upon removal from the digestion vessel, the remaining EBC is grit blasted off the parts with walnut shells. The parts are then re-assembled to re-form the large component.

### Example 6

A coupon comprising a CMC substrate coated with EBC is suspended above sulfuric acid inside of a closed digestion vessel. The vessel is pressurized to 2900 psi for one hour.

### Example 7

A CMC component coated with EBC is slotted such that a multitude of equally-spaced cuts are made through the EBC down to the bond coat. The component is placed in a closed vessel with aqua regia. Heat is applied to the vessel to bring the vessel to a temperature of 280 ºC. The coupon is exposed to an elevated pressure of 100 psi for an exposure time of 30 minutes to digest the EBC.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Further aspects of the disclosure are provided by the subject matter of the following clauses:

A method for removing a coating from a coated component, the coated component comprising an environmental barrier coating disposed on a substrate, the method comprising: contacting the environmental barrier coating with a reagent in a closed vessel; and exposing the coated component to at least one of an elevated pressure or an elevated temperature in the closed vessel to digest at least a portion of the environmental barrier coating via the reagent and form a stripped substrate.

The method of any preceding clause, wherein the substrate is formed from a ceramic matrix composite (CMC) material.

The method of any preceding clause, wherein the reagent comprises a base.

The method of any preceding clause, wherein the reagent comprises a mineral acid.

The method of any preceding clause, wherein the mineral acid comprises at least one of nitric acid (HNO3), hydrochloric acid (HCl), hydrofluoric acid (HF), sulfuric acid (H2SO4), phosphoric acid (H3PO4), hydrogen peroxide (H2O2), aqua regia, reverse aqua regia, or boric acid (H3BO3).

The method of any preceding clause, wherein the environmental barrier coating further comprises a bond coat disposed between an environmental barrier coating topcoat and the substrate, wherein the reagent is a first reagent, the elevated pressure is a first elevated pressure, and the elevated temperature is a first elevated temperature, and wherein the method further comprises: contacting the bond coat with a second reagent in the closed vessel and exposing the coated component to at least one of a second elevated pressure or a second elevated temperature in the closed vessel to digest at least a portion of the bond coat.

The method of any preceding clause, wherein the environmental barrier coating further comprises a thermally grown oxide (TGO) disposed between an environmental barrier coating topcoat and the substrate, wherein the reagent is a first reagent, the elevated pressure is a first elevated pressure, and the elevated temperature is a first elevated temperature, and wherein the method further comprises: contacting the TGO with a third reagent in the closed vessel and exposing the coated component to at least one of a third elevated pressure or a third elevated temperature in the closed vessel to digest at least a portion of the TGO.

The method of any preceding clause, wherein contacting the environmental barrier coating with the reagent includes submerging at least a portion of the substrate in the reagent in the closed vessel.

The method of any preceding clause, wherein exposing the coated component to the elevated temperature is performed via at least one of microwave, furnace, conduction, or radio frequency (RF) heating.

The method of any preceding clause, wherein exposing the coated component to the elevated pressure comprises building pressure in the closed vessel during a reaction of the environmental barrier coating with the reagent.

The method of any preceding clause, wherein exposing the coated component to the elevated pressure comprises adjusting pressure in the closed vessel via a pressure control system.

The method of any preceding clause, wherein the pressure control system adjusts the pressure in the closed vessel to a target pressure to accelerate digestion of the coating by the reagent.

The method of any preceding clause, wherein the elevated temperature is in the range of about 100 degrees Celsius and about 500 degrees Celsius.

The method of any preceding clause, wherein the elevated temperature is in the range of about 100 degrees Celsius and about 300 degrees Celsius.

The method of any preceding clause, wherein the elevated pressure is in the range of about 100 psi and about 2800 psi.

The method of any preceding clause, wherein exposing the coated component to the elevated pressure and the elevated temperature is performed for an exposure time in the range of about 10 minutes and about 2 hours.

The method of any preceding clause, further comprising removing at least a portion of the coating from the stripped substrate via mechanical abrasion.

The method of any preceding clause, wherein the mechanical abrasion is performed via at least one of water jet cleaning, abrasive material blasting, or ice blasting.

The method of any preceding clause, further comprising forming a replacement coating on at least a portion of the stripped substrate.

The method any preceding clause, wherein the stripped substrate comprises a ceramic matrix composite substrate, and wherein the replacement coating comprises at least one of a replacement bond coat or a replacement environmental barrier coating.

The method of any preceding clause, wherein the stripped substrate comprises a bond coat, and wherein the replacement coating comprises a replacement environmental barrier coating.

## Claims

1. A method for removing a coating from a coated component, the coated component comprising an environmental barrier coating (104) disposed on a substrate (102), the method comprising:
contacting the environmental barrier coating (104) with a reagent (122) in a closed vessel (124, 150); and
exposing the coated component to an elevated pressure and an elevated temperature in the closed vessel (124, 150) to digest at least a portion of the environmental barrier coating via the reagent (122) and form a stripped substrate (102).

2. The method of claim 1, wherein the substrate (102) is formed from a ceramic matrix composite (CMC) material.

3. The method of any preceding claim, wherein the reagent (122) comprises a mineral acid.

4. The method of claim 4, wherein the mineral acid comprises at least one of nitric acid (HNO₃), hydrochloric acid (HCl), hydrofluoric acid (HF), sulfuric acid (H₂SO₄), phosphoric acid (H₃PO₄), hydrogen peroxide (H₂O₂), aqua regia, reverse aqua regia, or boric acid (H₃BO₃).

5. The method of any preceding claim, wherein the environmental barrier coating (104) further comprises a bond coat (106) coat disposed between an environmental barrier coating top coat (108) and the substrate (102), wherein the reagent (122) is a first reagent (122), the elevated pressure is a first elevated pressure, and the elevated temperature is a first elevated temperature, and wherein the method further comprises:
contacting the bond coat (106) with a second reagent (122) in the closed vessel (124, 150) and exposing the coated component to a second elevated pressure and a second elevated temperature in the closed vessel (124, 150) to digest at least a portion of the bond coat (106).

6. The method of any preceding claim, wherein the environmental barrier coating (104) further comprises a thermally grown oxide (TGO) disposed between an environmental barrier coating top coat (108) and the substrate (102), wherein the reagent (122) is a first reagent (122), the elevated pressure is a first elevated pressure, and the elevated temperature is a first elevated temperature, and wherein the method further comprises:
contacting the TGO with a third reagent (122) in the closed vessel (124, 150) and exposing the coated component to a third elevated pressure and a third elevated temperature in the closed vessel (124, 150) to digest at least a portion of the TGO.

7. The method of any preceding claim, wherein exposing the coated component to the elevated temperature is performed via at least one of microwave, furnace, conduction, or radio frequency (RF) heating.

8. The method of any preceding claim, wherein exposing the coated component to the elevated pressure comprises building pressure in the closed vessel (150) (124) during a reaction of the environmental barrier coating with the reagent (122).

9. The method of any preceding claim, wherein exposing the coated component to the elevated pressure comprises adjusting pressure in the closed vessel (124, 150) via a pressure control system, and wherein the pressure control system adjusts the pressure in the closed vessel (124, 150) to a target pressure to accelerate digestion of the coating by the reagent (122).

10. The method of any preceding claim, wherein the elevated temperature is in the range of about 100 degrees Celsius and about 500 degrees Celsius.

11. The method of any preceding claim, wherein the elevated pressure is in the range of about 100 psi and about 2800 psi.

12. The method of any preceding claim, wherein exposing the coated component to the elevated pressure and the elevated temperature is performed for an exposure time in the range of about 10 minutes and about 2 hours.

13. The method of any preceding claim, further comprising removing at least a portion of the coating from the stripped substrate (102) via mechanical abrasion.

14. The method of any preceding claim, further comprising forming a replacement coating on at least a portion of the stripped substrate (102).

15. The method of claim 14, wherein the stripped substrate (102) comprises a ceramic matrix composite substrate (102), and wherein the replacement coating comprises at least one of a replacement bond coat (106) or a replacement environmental barrier coating.
